# EUROPEAN PATENT APPLICATION

(11) **EP 1 416 698 A1**
(43) Date of publication of application: **06.05.2004**
(21) Application number: 03255142.6
(22) Date of filing: 20.08.2003
(51) Int. Cl.: H04L 29/06

(54) **Method and apparatus for recognising the access of data previously notified via a push message**

(30) Priority: 28.10.2002 US 282530
(71) Applicant: Openwave Systems Inc., Redwood City, CA 94063 (US)
(72) Inventor: Wills, Fergus Martin, Belfast, Country Antrim BT6 0BB (IE); McTavish, David John, Belfast, Country Antrim BT4 3EN (IE)
(74) Representative: W.P. Thompson & Co.

(57) **Abstract**

A method and apparatus for recognition of activation of a pushed notification to access a resource are described. The method comprises pushing a notification content type to a set of one or more wireless devices, the notification content type indicating a resource, and determining whether the resource is accessed by one or more of the set of wireless devices responsive to the pushed notification content type.

## Description

The invention relates to the field of communication. More specifically, the invention relates to communication networks.

A push proxy gateway is a network element that is accessed using the Push Access Protocol (PAP). A push proxy gateway enables efficient delivery of e-mail, software, information, etc. PAP involves transmitting content to a user, in this case a notification, which has not been previously requested. The notification content type indicates a resource target (e.g., a uniform resource identifier (URI)) to access a resource (e.g., a file, image, software, web page, etc.). Once the notification content type is activated (via the resource target, i.e., the user clicks on the URI), the user's device retrieves the resource. For example, a notification of new e-mail can be sent to a user's device. The notification identifies an address at which the e-mail can be retrieved. The e-mail is retrieved and downloaded to the user's device after the user clicks on the notification content type.

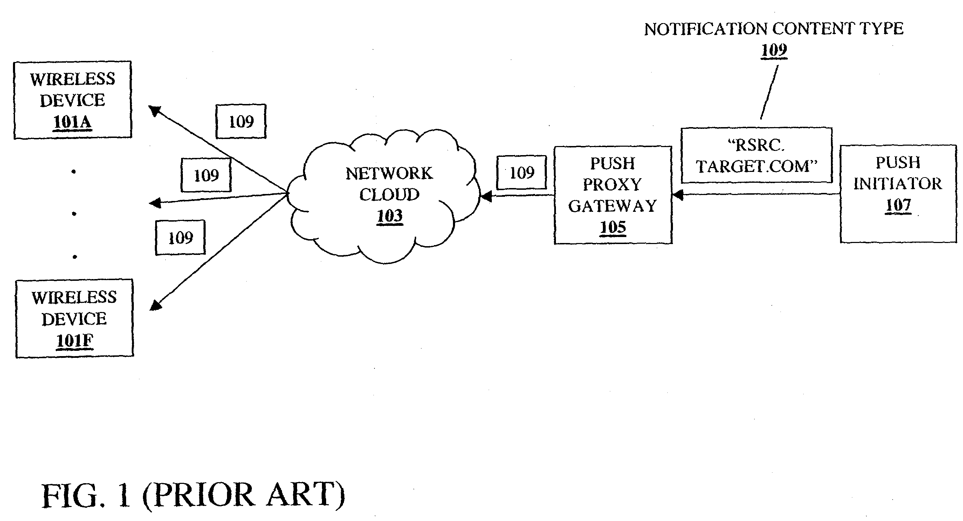

Figure 1 shows an example of a notification content type being pushed to a set of wireless devices. A push initiator 107 transmits a notification content type 109 to a push proxy gateway (PPG) 105. The notification content type 109 indicates a resource target and a set of one more recipients. The PPG 105 transmits the notification content type 109 to a network cloud 103. The network cloud 103 transmits the notification content type 109 to a set of wireless devices 101A - 101F in accordance with the notification content type 109 that indicates recipients (e.g., by IP address, cell phone number, etc.).

While pushing notification content types to recipients enables efficient delivery of data, this is only true if the recipients actually respond to the notification content types. If recipients ignore notification content types (e.g., do not click on a URI indicated by a notification content type), then nothing has been delivered. The entities pushing notification content types are unaware of whether recipients are responding (e.g., activating the notification content type by clicking on the URI of a notification content type) to these notification content types or ignoring them.

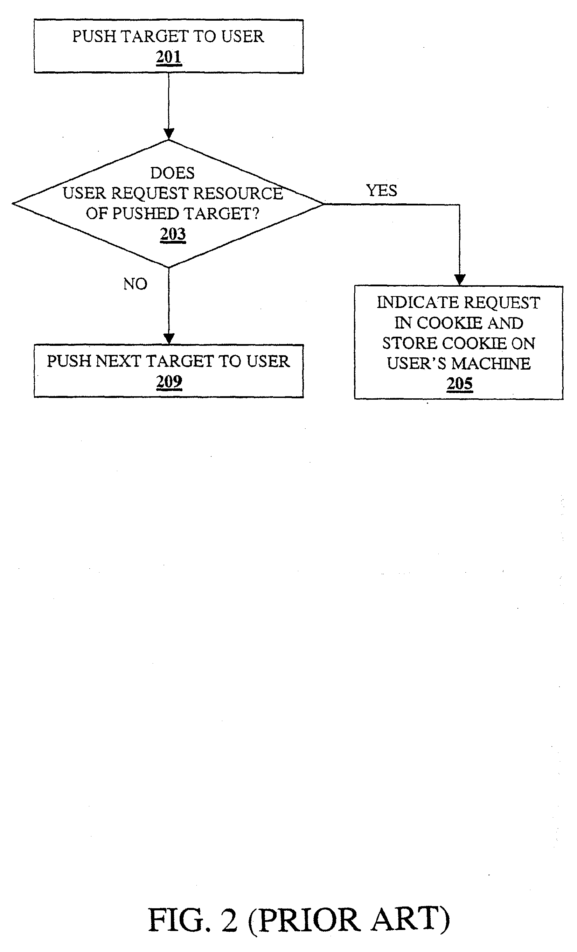

Figure 2 shows an example of a process for tracking resource requests with cookies. At block 201 a notification content type is pushed to a user. At block 203, it is determined whether the user requests the resource of the pushed notification content type. If the user requests the resource, then control flows to block 205. If the user does not request the resource, then control flows to block 209. At block 205, the request is indicated in a cookie by an application that processes cookie related data, which is stored on the user' s machine. At block 209, the next notification content type is pushed to the user.

Although cookies can be used to track the resource requests of a user, cookies intrude upon the user' s machine, consume space on that users machine, and may be deleted by a user. In addition, the technique illustrated in Figure 2 has the same problem as the technique in Figure 1; neither of the illustrated techniques can reliably track whether notification content types are ignored or activated.

A method and apparatus for recognition of activation of a pushed notification to access a resource is described. The method provides for pushing a notification content type to a set of one or more wireless devices. The notification content type indicates a resource. In addition, the method provides for determining whether said resource is accessed by one or more of the set of wireless devices responsive to the pushed notification content type.

In accordance with a first aspect of the present invention there is a method comprising:
pushing a notification content type to a set of one or more wireless devices, said notification content type indicating a resource; and
determining whether said resource is accessed by one or more of the set of wireless devices responsive to the pushed notification content type.

In accordance with a second aspect of the present invention there is a computer program product or a machine-readable storage medium comprising instructions which configure a processing system to perform the method just stated.

In accordance with a third aspect of the present invention there is a processing system comprising:
a set of one or more processors;
a communications device to enable the processing system to communicate over a network; and
a set of one or more storage devices coupled to the set of processors and containing instructions which, when executed by the set of processors, causes the processing system to perform a process which includes receiving a notification content type via the network;
associating a transaction identifier with the notification content type, said notification content type indicating a set of one or more wireless devices and a resource;
transmitting the notification content type and the transaction identifier to the set of wireless devices;
if a message including the transaction identifier and the resource is received, then indicating in a database that the resource of the notification content type associated with the transaction identifier has been requested; and
if a time period expires and a message has not been received, then indicating in the database that the notification content type associated with the transaction identifier has been ignored.

In accordance with a fourth aspect of the present invention there is a method comprising:
tracking a notification content type that indicates a resource, said notification content type having been pushed to a set of one or more wireless devices;
recognizing whether the resource has been requested responsive to said notification content type; and
indicating whether the resource has been requested.

In accordance with a fifth aspect of the present invention there is a system comprising:
a bus system;
a set of one or more processors coupled with said bus system;
a set of one or more data communications devices coupled with said bus system, the set of data communications devices to receive notification content types;
a storage device coupled with said bus system, said storage device to store a notification content type tracking database; and
a machine-readable medium having a set of instructions when executed by said set of processors to cause the system to associate a notification content type to be pushed to a set of one or more wireless devices with a transaction identifier, and
track in the notification content type database whether a resource indicated by a pushed notification content type is requested by a notification content type associated with the pushed notification content type.

In accordance with a sixth aspect of the present invention there is an apparatus comprising:
a memory to store a notification content type tracking database;
means for tracking in the notification content type tracking database a notification content type that indicates a resource, said notification content type having been pushed to a set of one or more wireless devices;
means for recognizing whether the resource has been requested responsive to said notification content type; and
means for indicating in the notification content type tracking database whether the resource has been requested.

In accordance with a seventh aspect of the present invention there is a machine-readable medium having a set of instructions, which when executed by a set of one or more processors, cause said set of processors to perform operations comprising:
pushing a notification content type to a set of one or more wireless devices, said notification content type indicating a resource; and
determining whether said resource is accessed by one or more of the set of wireless devices responsive to the pushed notification content type.

In accordance with an eighth aspect of the present invention there is a machine-readable medium having a set of instructions, which when executed by a set of one or more processors, cause said set of processors to perform operations comprising:
tracking a notification content type that indicates a resource, said notification content type having been pushed to a set of one or more wireless devices;
recognizing whether the resource has been requested responsive to said notification content type; and
indicating whether the resource has been requested.

In accordance with a ninth aspect of the present invention there is a machine-readable medium having a set of instructions, which when executed by a set of one or more processors, cause said set of processors to perform operations comprising:
receiving a notification content type;
associating a transaction identifier with the notification content type, said notification content type indicating a set of one or more wireless devices and a resource;
transmitting the notification content type and the transaction identifier to the set of wireless devices;
if a message including the transaction identifier and the resource is received, then indicating in a database that the resource of the notification content type associated with the transaction identifier has been requested; and
if a time period expires and a message has not been received, then indicating in the database that the notification content type associated with the transaction identifier has been ignored.

The invention may best be understood by referring to the following description and accompanying drawings that are used to illustrate embodiments of the invention. In the drawings:
Figure 1 shows an example of a notification content type being pushed to a set of wireless devices.
Figure 2 shows an example of a process for tracking resource requests with cookies.
Figure 3A illustrates an example of a notification content type being pushed and tracked according to one embodiment of the invention.
Figure 3B illustrates an example of recognition of a target request corresponding to the pushed notification content type according to one embodiment of the invention.
Figure 4 illustrates an example of a notification content type tracking database maintained on a PPG according to one embodiment of the invention.
Figure 5 illustrates an example of an alternative notification content type tracking database according to one embodiment of the invention.
Figure 6 illustrates an example of a target request tracking database maintained on a WAG according to one embodiment of the invention.
Figure 7 shows a process of tracking a notification content type with a transaction identifier according to one embodiment of the invention.
Figure 8 shows a process of recognizing activation of a notification content type according to one embodiment of the invention.
Figure 9 shows a process of updating a notification content type tracking database according to one embodiment of the invention.
Figure 10 shows a process of clearing entries in a notification content type tracking database according to one embodiment of the invention.
Figure 11 is a high-level block diagram showing an example of a processing system which may be used to implement any of the devices mentioned above, e.g., a proxy, or a gateway.

A method and apparatus for recognizing activation of a pushed notification content type to access a resource is described. Note that in this description, references to "one embodiment" or "an embodiment" mean that the feature being referred to is included in at least one embodiment of the present invention. Further, separate references to "one embodiment" in this description do not necessarily refer to the same embodiment; however, neither are such embodiments mutually exclusive, unless so stated and except as will be readily apparent to those skilled in the art. For example, a feature, structure, act, etc. described in one embodiment may also be included in other embodiments. Thus, the present invention can include a variety of combinations and/or integrations of the embodiments described herein.

As described in greater detail below, an intermediary node on a data communications network, such as a proxy, may implement a pushed notification content type activation recognition technique. The intermediary node receives notification content types, which indicate resources, to be pushed to wireless devices and tracks these notification content types with transaction identifiers. The intermediary node maintains a database of the transaction identifiers and whether the corresponding resources are requested or ignored in response to the pushed notification content types. The intermediary node may also indicate in the database whether a user of a wireless device discards a notification content type.

To facilitate description, the recognition technique is described herein as being implemented within a push proxy gateway. Note, however, that in other embodiments the technique may be implemented within other types of intermediary network nodes, such as switches, routers, gateways, and other similar devices.

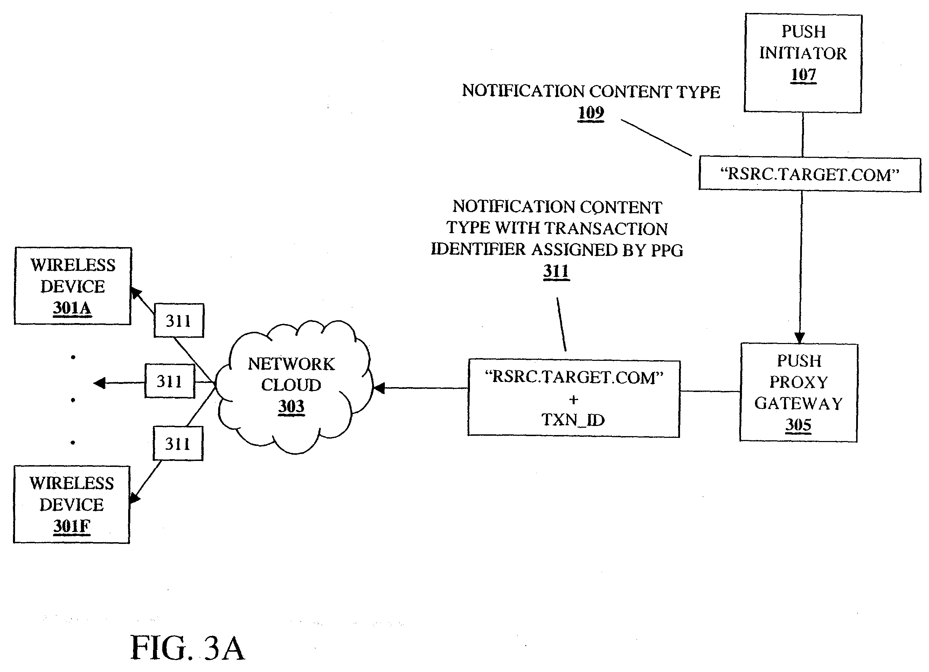

Figures 3A through 3B illustrate recognition of activation of a notification content type according to one embodiment of the invention. Figure 3A illustrates an example of a notification content type being pushed and tracked according to one embodiment of the invention. In Figure 3A, a push initiator 307 transmits a notification content type 309 that indicates a resource target (e.g., a URI) to a push proxy gateway (PPG) 305. The PPG 305 associates a transaction identifier with the notification content type. The PPG 305 transmits to a network cloud 303 a modified notification content type 311 that includes the transaction identifier. A variety of techniques may be utilized to include the transaction identifier with the notification content type. For example, in one embodiment of the invention, the transaction identifier, which is the value 1234 in the described examples, is included as a parameter of a URI as illustrated by the following example:
address/path ?ppg-id= 1234
In an alternative embodiment of the invention, the transaction identifier may be included with the notification content type as meta-data as illustrated by the following example:
x-entity-push-id: 1234
address/path

The network cloud 303 transmits the modified notification content type 311 to a set of wireless devices 301A - 301F (e.g., pagers, cell phones, etc.).

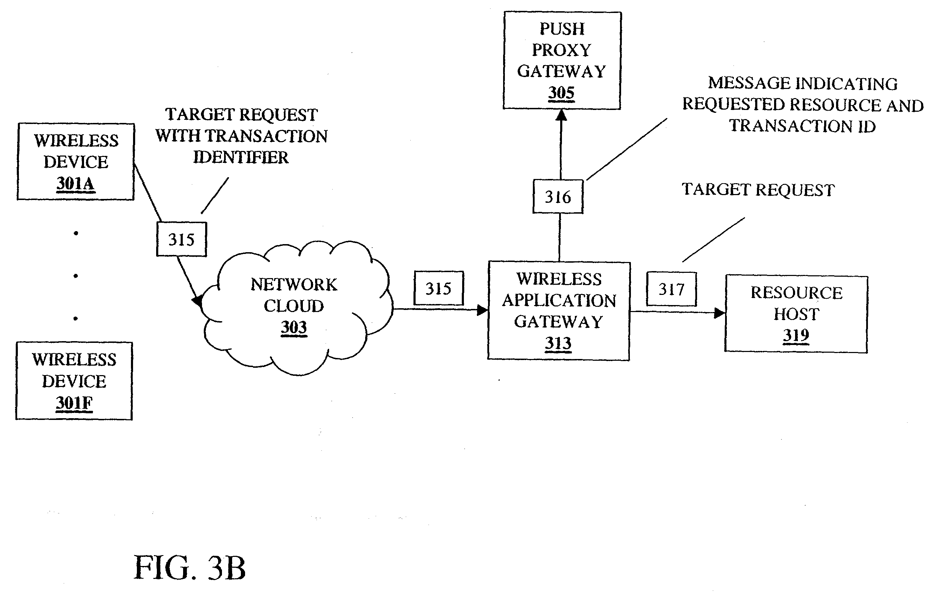

Figure 3B illustrates an example of recognition of a target request corresponding to the pushed notification content type according to one embodiment of the invention. In Figure 3B, a user at the wireless device 301A activates the previously received modified notification content type 311 and requests the resource indicated by the modified notification content type 311. The wireless device 301A transmits to the network cloud 303 a target request 315 that includes the transaction identifier indicated in the modified notification content type 311. In one embodiment of the invention, the target request 315 is implemented as a parameter of the resource target as in the following example:
HTTP GET address/path?ppg-id=1234
In an alternative embodiment of the invention, the target request 315 is implemented as meta-data as illustrated in the following example:
HTTP x-entity-push-id:1234
GET address/path

The network cloud 303 transmits the target request 315 to a wireless application gateway (WAG) 313. The WAG 313 transmits a message 316 that indicates the requested resource and the transaction identifier to the PPG 305. In one embodiment of the invention, the message 316 is implemented as in the following example: HTTP POST http://ppg/ack?transactionid=1234. The WAG 313 also transmits a target request 317 that does not indicate the transaction identifier to a host 319.

In an alternative embodiment of the invention, a notification content type provides a recipient the capability of discarding the notification content type instead of or in addition to ignoring the notification content type. In such an embodiment, when the recipient selects to discard the notification content type, the recipient wireless device sends a target discard to the PPG, either directly or via the WAG. The PPG processes the target discard and indicates the corresponding notification content type as discarded. The entity that pushed the notification content type can utilize the discard information to determine whether or not to make further attempts to push similar notification content types to the recipient wireless device.

Tracking user responses to notification content types can be utilized for numerous purposes including provisioning commands, delivering software, accounting, mass marketing, etc. A service provider can customize services to a user by recognizing which notification content types the user activates and configuring services of those resources requested by the users in response to the notification content types, and barring services corresponding to those pushed notification content types that are discarded or ignored by users. In addition, a content and/or service provider can confirm whether wireless devices have downloaded new software.

If notification content types are utilized to push advertisements, recognition of which advertisements (i.e., notification content types) are activated by users provides valuable accounting details for garnering revenues related to advertisements. Furthermore, recognizing which resources are requested in response to pushed notification content types provides valuable data for mass marketing (e.g., improving targeted marketing).

Furthermore, tracking activation of notification content types can be utilized to prove receipt of such notification content types. For example, a dispatching company may notify a driver to return to pick up a parcel for delivering. The dispatching company can determine whether or not to assign the task to a different driver and have proof of whether the initially contacted driver received the notification.

In addition, the target indicated in the target request is not materially affected in the notification content type. Therefore, if the notification goes through a gateway that does not support the tracking mechanism, it will be passed on to the resource host without affecting the target request.

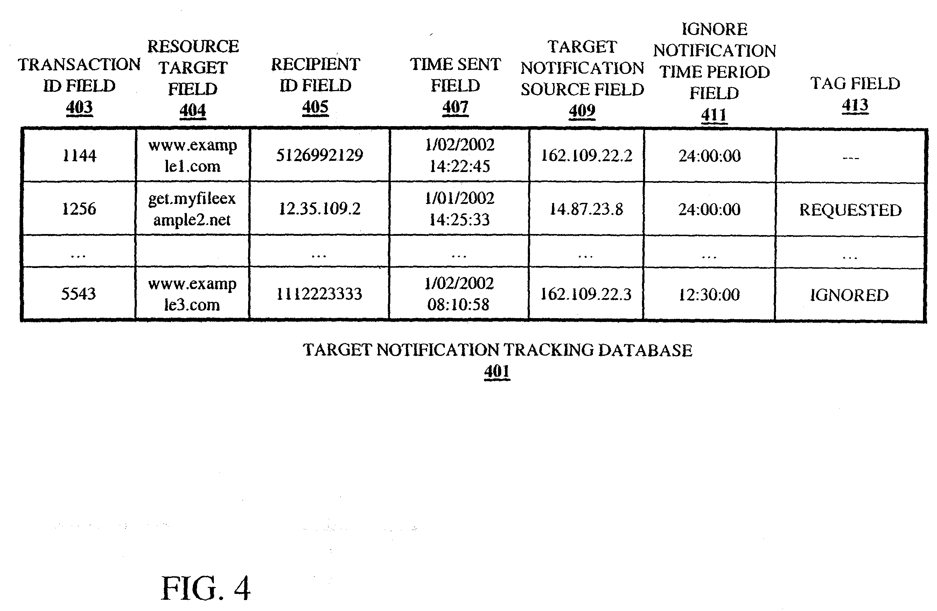

Figure 4 illustrates an example of a notification content type tracking database maintained on a PPG according to one embodiment of the invention. In Figure 4, a notification content type tracking database 401 includes multiple entries each having multiple fields. These fields include the following: a transaction identifier field 403, a resource target field 404, a recipient identifier field 405, a time sent field 407, a notification content type source field 409, an ignore notification time period field 411, and a tag field 413. The transaction ID field 403 indicates the transaction ID that has been associated with a notification content type. In the example illustrated in Figure 4, the transaction ID field 403 of each entry includes a four-digit number. Various embodiments of the invention may utilize different types of data to be transaction identifiers. The four-digit numbers utilized in Figure 4 are for illustrative purposes only and are not limiting upon the invention (e.g., the transaction ID may be a gateway address and a four digit number, a gateway address and a port, etc.). The resource identifier field 404 indicates a resource target of a notification content type. In the example notification content type tracking database 401 illustrated in Figure 4, the first entry indicates a URI "www.example1.com" in its resource ID field 404. The second example entry indicates a URI "get.myfileexample2.net" in its resource ID field 404. The last example entry indicates a URI "www.example3.com" in its resource ID field 404.

The recipient ID field 405 indicates a recipient's address. For example, the first and last entries of the example database 401 indicate phone numbers of wireless devices. The second example entry of the example database 401 indicates an IP address. The time sent field 407 indicates the time when the corresponding notification content type was sent from the PPG. In the example database 401 each of the entries indicate a date and time in their time sent field 407. The notification content type source field 409 identifies the source of the notification content type. Each of the entries in the example database 401 indicates an IP address in their notification content type source field 409. Alternative embodiments of the invention may utilize other addressing schemes instead of or in addition to IP addressing (e.g., MAC addressing). The ignore notification time period field 411 indicates a duration of time for which a notification content type can still be requested. After that duration of time expires, the entry will be tagged as ignored. Although the exemplary entries in Figure 4 measure the ignore notification time period with hours, minutes, and seconds, any time metric can be utilized.

The ignore notification time period field 411 is used in determining whether an entry should be tagged as ignored. For example the first entry of the example database 401 indicates 24-hours in its ignore notification time period field 411. Hence, if more than 24 hours has passed since the notification content type has been sent as indicated by the time sent field 407 without activation by a user, then the first entry is tagged as ignored. In an alternative embodiment of the invention, the ignore notification time period field 411 is replaced with a time expire field. In such an embodiment, the time expire field indicates a time at which a notification content type is considered ignored if the corresponding resource has not been requested. In another embodiment of the invention, both the time sent field 407 and the ignore notification time period field 411 are replaced with a time expire field.

The tag field 413 indicates whether a resource of a notification content type has been requested or the notification content type has been ignored. In alternative embodiments of the invention, the tag field 413 also indicates if the notification content type has been discarded. Although text strings in the example database 401 indicate requested or ignored, a variety of different values can be utilized to indicate requested or ignored (e.g., a bit value, a 2-bit value, etc.).

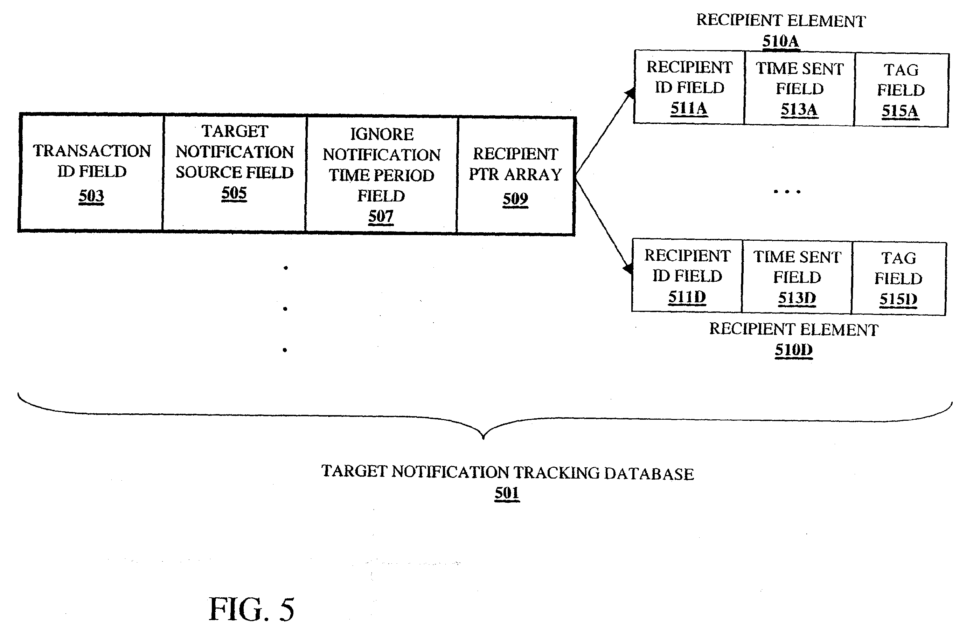

Figure 5 illustrates an example of an alternative notification content type tracking database according to one embodiment of the invention. In Figure 5, a single entry of a notification content type tracking database 501 is illustrated. As in Figure 4, the notification content type tracking database 501 includes a transaction ID field 503, a notification content type source field 505, and an ignore notification time period field 507. The notification content type tracking database 501 also includes a recipient pointer array 509. Instead of having multiple entries for a notification content type sent to multiple wireless devices, the notification content type tracking database 501 includes a list of recipient wireless devices for each transaction. Although Figure 5 illustrates the notification content type tracking database 501 as including a recipient pointer array 509, alternative embodiments of the invention may implement a hash table, a binary search tree, etc. for the recipient elements. The recipient pointer array 509 references recipient elements 510A - 510D. Each of the recipient elements 510A - 510D includes a recipient ID field, a time sent field, and a tag field. The recipient element 510A includes a recipient ID field 511A, a time sent field 513A, and a tag field 515A. The recipient element 510D includes a recipient ID field 511D, a time sent field 513D, and a tag field 515D.

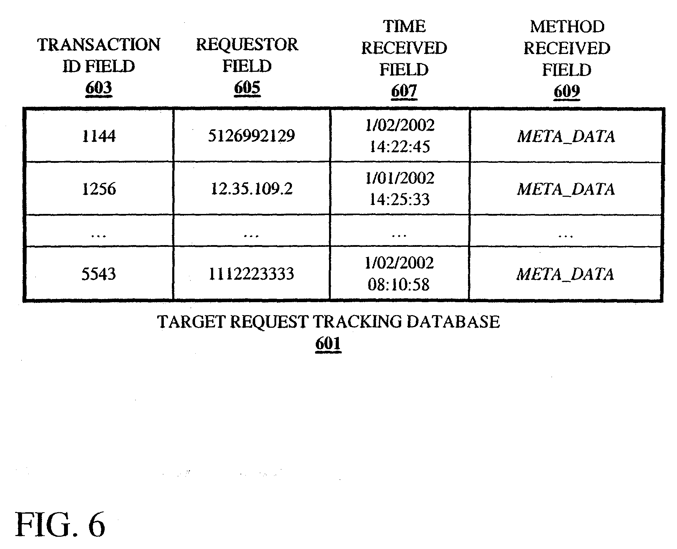

The structure of the databases illustrated in Figures 5 and 6 are for illustrative purposes only. The databases can be implemented with any of a variety of data structures and/or combinations of data structures.

Figure 6 illustrates an example of a target request tracking database maintained on a WAG according to one embodiment of the invention. Although Figure 6 is described with reference to a WAG, the different intermediary nodes that receive target requests can maintain the target request tracking database illustrated in Figure 6. A target request tracking database 601 includes the following fields: a transaction identifier field 603, a requestor field 605, a time received field 607, and a method received field 609. The transaction ID field 603 identifies a transaction ID as in Figure 4 and 5. In alternative embodiments of the invention, the WAG does not include the transaction identifier field in its target request tracking database. Instead, the WAG strips the transaction identifier from the target request and includes it in the message sent to the PPG without including it in the target request tracking database.

The requester field 605 identifies the wireless devices that transmitted the target request. The time received field 607 indicates the time at which the target request was received by the WAG. The method received field 609 indicates data describing how the target request was received. The method received field 609 may include meta-data from the header of the target request as illustrated in the following example:
host: www.examplehost.net:80
Accept-Language: en
User-Agent: SIE-S35/1.0 UP/4.1.8 UP.Browser/4.1.8-XXXX UP.Link/4.1.0.8
x-up-devcap-max-pdu: 2000
x-up-devcap-charset: utf-8
Connection:Keep-Alive
x-up-devcap-iscolor: 0
x-up-devcap-immed-alert: 1
Accept: application/vnd.wap.wmlc;Type=1108, application/vnd.wap.wmlc,
   application/vnd.wap.wmlscriptc, application/vnd.uplanet.signal,
   application/vnd.uplanet.cacheop-wbxml,
application/vnd.uplanet.alert-wbxml,
   application/vnd.uplanet.channel-wbxml,
application/vnd.uplanet.list-wbxml,
   application/vnd.uplanet.listcmd-wbxml,
application/vnd.uplanet.bearer-choice-wbxml,
   application/vnd.wap.multipart.related,
application/vnd.wap.multipart.mixed,
   application/x-up-device, application/vnd.phonecom.mmc-wbxml,
image/vnd.wap.wbmp,
image/bmp,image/vnd.wap.wbmp,application/vnd.uplanet.alert,application/x-up-alert,

application/vnd.uplanet.bearer-choice,application/vnd.uplanet.cacheop,
   application/x-up-cacheop,application/vnd.uplanet.channel,
   application/vnd.uplanet.list,application/vnd.uplanet.listcmd,
application/vnd.phonecom.mmc-xml,

text/x-wap. wml,text/vnd.wap.wml,text/x-hdml,text/html,text/vnd.wap.wmlscript
x-up-devcap-numsoftkeys: 2
x-up-devcap-softkeysize: 5
Accept-Charset: utf-8, UTF-8

In alternative embodiments of the invention, a WAG does not track target requests. In such embodiments of the invention, a WAG either selects only those target requests with transaction identifiers to be used for generating activation messages sent to a PPG or copies all target requests and forwards those copied target requests to the PPG. Thus, the task of filtering target requests with transaction identifiers is placed on the PPG.

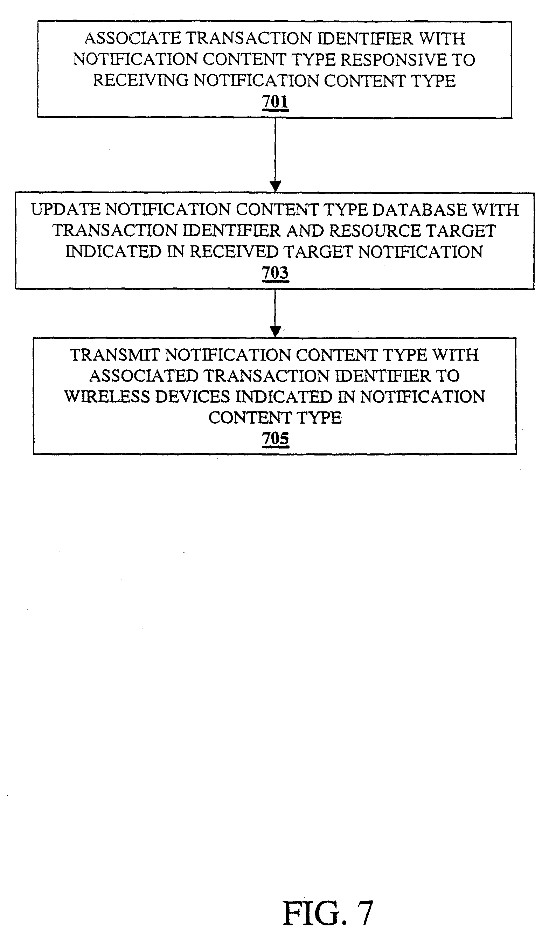

Figure 7 shows a process of tracking a notification content type with a transaction identifier according to one embodiment of the invention. At block 701, a transaction identifier is associated with a notification content type responsive to receiving the notification content type. At block 703, a notification content type database is updated with the transaction identifier and a resource target indicated in the received notification content type. At block 705, the notification content type with the associated transaction identifier is transmitted to wireless devices indicated in the notification content type.

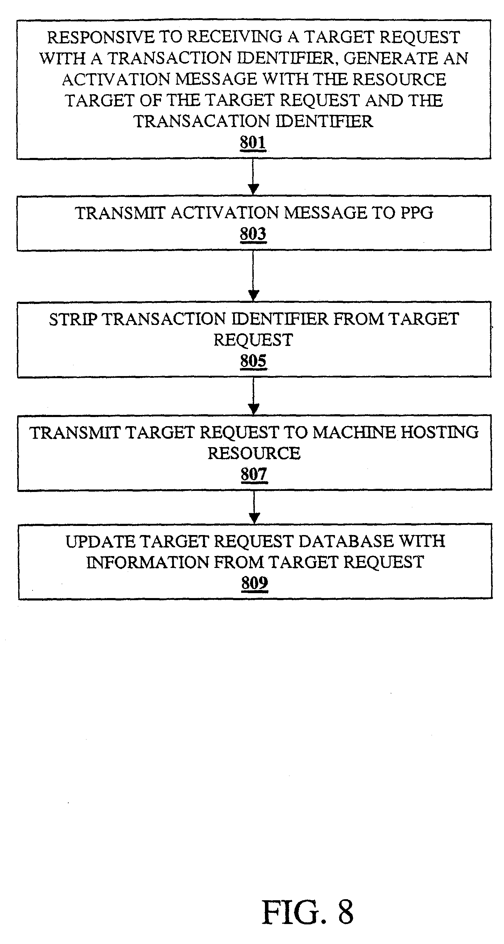

Figure 8 shows a process of recognizing activation of a notification content type according to one embodiment of the invention. At block 801, responsive to receiving a target request with a transaction identifier, an activation message including the resource target of the target request and the transaction identifier is generated. At block 803, the activation message is transmitted to a PPG. At block 805, the transaction identifier is stripped from the target request. At block 807, the target request is transmitted to a machine hosting the resource. At block 809, the target request database is updated with the information from the target request.

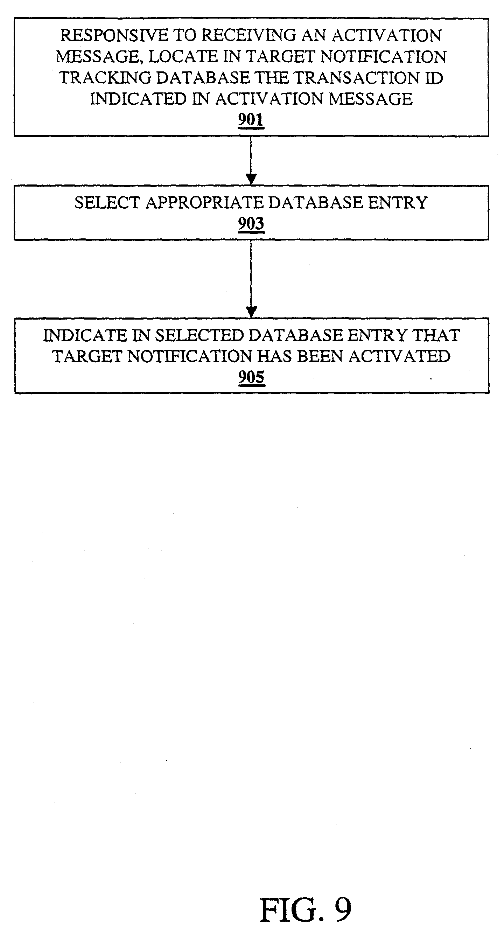

Figure 9 shows a process of updating a notification content type tracking database according to one embodiment of the invention. At block 901, responsive to receiving an activation message, a transaction identifier indicated in the activation message is located in a notification content type tracking database. At block 903, the appropriate database entry is selected. At block 905, it is indicated in the selected database entry that the notification content type has been activated.

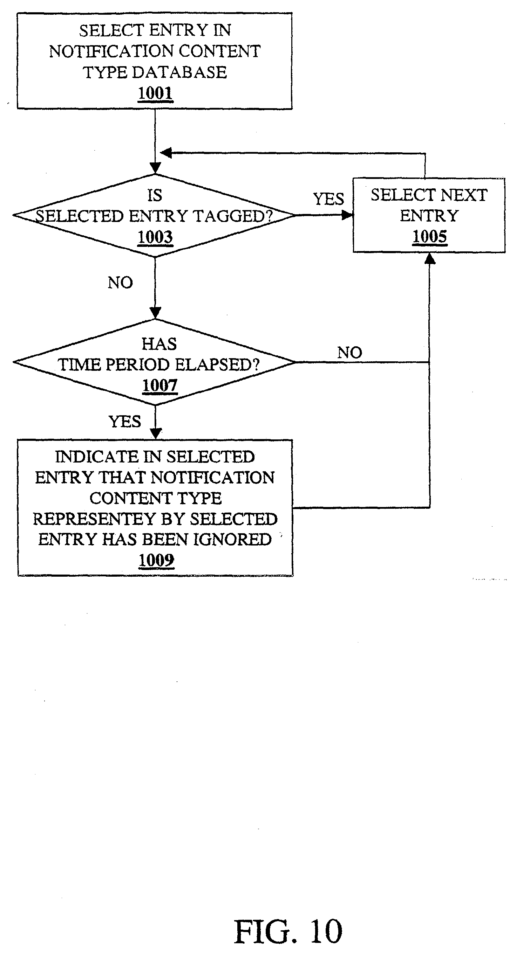

Figure 10 shows a process of clearing entries in a notification content type tracking database according to one embodiment of the invention. At block 1001, an entry in a notification content type tracking database is selected. At block 1003, it is determined whether the selected entry is tagged. If it is determined that the selected entry is tagged, then control flows to block 1005. If it is determined that the selected entry is not tagged, then control flows to block 1007.

At block 1005, the next entry is selected.

At block 1007, it is determined whether a time period has elapsed. If it is determined that the time period has elapsed, then control flows to block 1009. If it is determined that the time period has not elapsed, then control flows block 1005.

At block 1009, it is indicated in the selected entry that the notification content type represented by the selected entry has been ignored. From block 1009, control flows to block 1005.

While the flow diagrams in the figures show a particular order of operations performed by certain embodiments of the invention, it should be understood that such order is illustrative only (e.g., alternative embodiments may perform the operations in a different order, combine certain operations, overlap certain operations, etc.).

For example, in Figure 7 block 703 may be performed after block 705 in alternative embodiments of the invention. Alternatively, blocks 703 and 705 may be performed in parallel. Referring again to Figure 8, in other embodiments of the invention, blocks 805, 807 and 809 may be performed before block 803, block 809 may be performed before blocks 803 - 807, block 809 may be performed before blocks 805 - 807, etc.

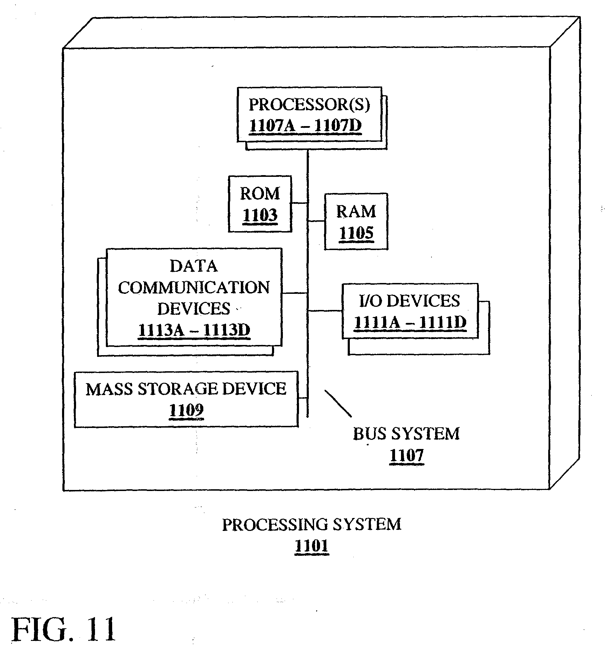

Figure 11 is a high-level block diagram showing an example of a processing system which may be used to implement any of the devices mentioned above, e.g., a proxy, or a gateway. Note that Figure 11 is a high-level conceptual representation, which is not intended to depict any one specific physical arrangement of components; such details are not germane to the present invention and are well within the knowledge of those skilled in the art. As shown, a processing system 1101 includes one or more processors 1107A - 1107D, i.e. a central processing unit (CPU), read-only memory (ROM) 1103, and random access memory (RAM) 1105 each connected to a bus system 1107. The processor(s) 1107A - 1107D may be, or may include, one or more programmable general-purpose or special-purpose microprocessors or digital signal processors (DSPs), application specific integrated circuits (ASICs), programmable logic devices (PLDs), or a combination of such devices. The bus system 1107 includes one or more buses, which may be connected to each other through various bridges, controllers and/or adapters, such as are well-known in the art. For example, the bus system 1107 may include a "system bus", which may be connected through one or more adapters to one or more expansion buses, such as a Peripheral Component Interconnect (PCI) bus , lightning data transport (LDT) bus, HyperTransport or industry standard architecture (ISA) bus, small computer system interface (SCSI) bus, universal serial bus (USB), or Institute of Electrical and Electronics Engineers (IEEE) standard 1394 bus (sometimes referred to as "Firewire").

Also coupled to the bus system 1107 are a mass storage device 1109, (optionally) a number of I/O devices 1111A - 1111D, and one or more data communication devices 1113A - 1113D. Mass storage device 1109 may be, or may include, any one or more devices suitable for storing large volumes of data in a non-volatile manner, such as a magnetic disk or tape, magneto-optical (MO) storage device, or any of various types of Digital Versatile Disk (DVD) or Compact Disk (CD) based storage, or a combination of such devices.

Each data communication device 1113A - 1113D is a device suitable for enabling the processing system to communicate with remote devices and may be, for example, a conventional modem, a Digital Subscriber Line (DSL) modem, a cable modem, an Ethernet adapter, an Integrated Services Digital Network (ISDN) adapter, a wireless transceiver (e.g., in the case of a mobile device), a satellite transceiver, or the like. The I/O device(s) 1111A - 1111D may include, for example, a keyboard or keypad, a monitor, and a pointing device (e.g., a mouse, trackball, or touchpad). Note, however, that such I/O devices may be unnecessary for certain devices and/or in certain embodiments. For example, a proxy or origin server does not necessarily require local I/O devices, particular if the proxy or origin server is not intended to directly interface with a user or operator. Similarly, a mobile device may not require a mass storage device. Many other variations on the above described embodiment other possible.

The elements of the processing system 1101 include a machine-readable medium on which is stored a set of instructions (i.e., software) embodying any one, or all, of the methodologies described herein. Software can reside, completely or at least partially, within this memory and/or within the processor and/or ASICs. For the purpose of this specification, the term "machine-readable medium" shall be taken to include any mechanism that provides (i.e., stores and/or transmits) information in a form readable by a machine (e.g., a computer). For example, a machine-readable medium includes the ROM, RAM, the mass storage device (e.g., magnetic disk storage media, optical storage media, flash memory devices), electrical, optical, acoustical, or other forms of propagated signals (e.g., carrier waves, infrared signals, digital signals, etc.), etc.

While the invention has been described in terms of several embodiments, those skilled in the art will recognize that the invention is not limited to the embodiments described. The method and apparatus of the invention can be practiced with modification and alteration within the spirit and scope of the appended claims. The description is thus to be regarded as illustrative instead of limiting on the invention.

## Claims

1. A method comprising:
pushing a notification content type to a set of one or more wireless devices, said notification content type indicating a resource; and
determining whether said resource is accessed by one or more of the set of wireless devices responsive to the pushed notification content type.

2. The method of claim 1 wherein determining comprises:
tracking the notification content type with a transaction identifier;
indicating the notification content type as requested if a message indicating the transaction identifier and the resource is received; and
indicating the notification content type as ignored if a time period expires.

3. The method of claim 2 wherein tracking the notification content type comprises:
storing the transaction identifier and addresses of the set of wireless devices in an entry of a notification content type tracking database; and
communicating the associated transaction identifier to the set of wireless devices.

4. The method of claim 3 wherein communicating the associated transaction identifier comprises including the transaction identifier in the notification content type as meta-data.

5. The method of claim 3 wherein communicating the associated transaction identifier comprises including the transaction identifier in the notification content type as part of a uniform resource identifier for the resource in the notification content type.

6. The method of claim 2 further comprising indicating which of the set of wireless devices requests the resource.

7. The method of claim 2 wherein the message of a POST HTTP message.

8. The method of claim 2 wherein the message is a PUT HTTP message.

9. The method of claim 1 further comprising indicating whether the notification content type has been discarded.

10. The method of claim 9 wherein indicating whether the notification content type has been discarded comprises receiving the message with the transaction identifier and not the resource.

11. The method of claim 1 wherein the notification content type indicates the resource with a uniform resource identifier.

12. The method of claim 1 further comprising communicating to a resource owner data reflecting responsiveness to pushed notification content types.

13. A computer program product or a machine-readable storage medium containing instructions which configure a processing system to perform the method recited in any of claims 1 through 12.

14. A processing system comprising:
a set of one or more processors;
a communications device to enable the processing system to communicate over a network; and
a set of one or more storage devices coupled to the set of processors and containing instructions which, when executed by the set of processors, causes the processing system to perform a process which includes receiving a notification content type via the network;
associating a transaction identifier with the notification content type, said notification content type indicating a set of one or more wireless devices and a resource;
transmitting the notification content type and the transaction identifier to the set of wireless devices;
if a message including the transaction identifier and the resource is received, then indicating in a database that the resource of the notification content type associated with the transaction identifier has been requested; and
if a time period expires and a message has not been received, then indicating in the database that the notification content type associated with the transaction identifier has been ignored.

15. The system of claim 15 wherein the notification content type indicates said resource with a uniform resource identifier.

16. The system of claim 14 wherein said process further includes adding an entry to the database that identifies the transaction identifier, the resource, and the set of wireless devices.

17. The system of claim 14 wherein the message is a POST HTTP message.

18. The system of claim 14 wherein said process further includes indicating in the database which of the set of wireless devices ignores or requests the resource.

19. The system of claim 14 wherein said process further includes indicating in the database that the resource of the notification content type associated with the transaction identifier is discarded if a message indicating the transaction identifier but not the resource is received.
